(19) Europäisches Patentamt
European Patent Office
Office européen des brevets

(11) **EP 0 830 271 B1**

(12) **EUROPÄISCHE PATENTSCHRIFT**

(45) Veröffentlichungstag und Bekanntmachung des Hinweises auf die Patenterteilung:
**11.08.1999 Patentblatt 1999/32**

(21) Anmeldenummer: 96919623.7

(22) Anmeldetag: 31.05.1996

(51) Int. Cl.⁶: **B60R 21/32**

(86) Internationale Anmeldenummer:
**PCT/DE96/00967**

(87) Internationale Veröffentlichungsnummer:
**WO 96/39315 (12.12.1996 Gazette 1996/54)**

(54) **STEUERANORDNUNG ZUR AUSLÖSUNG EINES RÜCKHALTEMITTELS IN EINEM FAHRZEUG BEI EINEM SEITENAUFPRALL**

CONTROL DEVICE FOR TRIGGERING A RESTRAINT SYSTEM IN A VEHICLE DURING A SIDEWAYS-ON COLLISION

DISPOSITIF DE COMMANDE POUR DECLENCHER UN DISPOSITIF DE RETENUE SUR UN VEHICULE EN CAS DE CHOC LATERAL

(84) Benannte Vertragsstaaten:
**DE FR GB IT**

(30) Priorität: **06.06.1995 DE 19520608**

(43) Veröffentlichungstag der Anmeldung:
**25.03.1998 Patentblatt 1998/13**

(73) Patentinhaber:
**SIEMENS AKTIENGESELLSCHAFT
80333 München (DE)**

(72) Erfinder: **JUNG, Walter
D-93170 Bernhardswald (DE)**

(56) Entgegenhaltungen:
**EP-A- 0 536 624        EP-A- 0 590 476
DE-A- 3 942 011        DE-A- 4 222 595
US-A- 5 083 276**

**Beschreibung**

Die Erfindung betrifft eine Steueranordnung zur Auslösung eines Rückhaltemittels in einem Fahrzeug bei einem Seitenaufprall gemäß Oberbegriff des Patentanspruchs 1.

Steueranordnungen zur Auslösung eines Rückhaltemittels bei einem Front- oder Schrägaufprall sind hinreichend bekannt und werden serienmäßig in Kraftfahrzeugen eingesetzt. Ein in Richtung der Fahrzeuglängsachse empfindlicher Beschleunigungssensor nimmt eine durch einen Front- oder Schrägaufprall verursachte negative Beschleunigung des Fahrzeugs auf. Eine Auslöseschaltung verarbeitet das Beschleunigungssignal nach einem Algorithmus, der im einfachsten Fall die Amplitude des Beschleunigungssignals mit einem Grenzwert vergleicht, und löst gegebenenfalls Rückhaltemittel wie Fahrer- und Beifahrerairbag oder Gurtstrammer aus. Bedingt durch den großen Abstand zwischen Aufprallort und Fahrgastzelle sowie die energieabsorbierende Wirkung der Knautschzone des Fahrzeugs kann ein relativ langer Zeitraum bis zur Auslösung der Rückhaltemittel durch die Steueranordnung zugelassen werden, ohne daß ihre Schutzwirkung für die Insassen beeinträchtigt wird. Diese Zeit wird zur Auswertung des Beschleunigungssignals genutzt. Dabei werden Informationen über die Schwere und Art des Aufpralls insbesondere durch Auswertung der späten Phasen des Beschleunigungssignals, in denen das Beschleunigungssignal auch seine Maximalamplitude erreicht, gewonnen.

Bei einem Seitenaufprall darf aufgrund des geringen Abstands zwischen Aufprallort und Fahrgastzelle sowie einer nur mäßig energieabsorbierenden Ausbildung der Knautschzone nur eine sehr kurze Zeitspanne von wenigen Millisekunden bis zur Auslöseentscheidung durch die Steueranordnung verstreichen. Innerhalb dieser Zeitspanne befindet sich ein durch einen Seitenaufprall hervorgerufenes Beschleunigungssignal quer zur Fahrzeuglängsachse in seiner Anstiegsphase. Seine Maximalamplitude erreicht das Beschleunigungssignal erst in einer späteren Phase, zu der aber bereits eine Auslöseentscheidung getroffen sein muß, um die Insassen noch wirksam schützen zu können. Bislang sind Beschleunigungssensoren zur Aufnahme von Querbeschleunigungen deshalb in Seitenteilen des Fahrzeugs, beispielsweise in den Türen angeordnet, um das in seiner ersten - aber für die Auslöseentscheidung entscheidenden - Phase schwache Beschleunigungssignal nahe an einen möglichen Seitenaufprallort aufzunehmen. Ein im zentralen Bereich des Fahrzeugs angeordneter Beschleunigungssensor zur Aufnahme von Querbeschleunigungen liefert aufgrund der Dämpfung durch die Fahrzeugkarosserie ein zumindest in seiner ersten Phase zu schwaches Beschleunigungssignal, um daraus eine sichere Auslöseentscheidung abzuleiten. Wird bei einem schwachen Beschleunigungssignal der Grenzwert als Auslöseschwellwert notwendigerweise sehr niedrig angesetzt, können schon geringe Schwankungen eines Beschleunigungssignals oder Störsignale eine unerwünschte Auslösung hervorrufen. Damit erschien bislang die Anordnung von Beschleunigungssensoren und Auslöseschaltung zur Auslösung von Rückhaltemittel bei einem Seitenaufprall in einem zentralen Steuergerät als nicht realisierbar.

Front- oder Schrägaufprall stellen ein weiteres Problem bei bislang bekannten Steueranordnungen zur Auslösung von Rückhaltemittel bei einem Seitenaufprall dar: Jeder Front- oder Schrägaufprall ruft auch eine Beschleunigung quer zur Fahrzeuglängsachse hervor, die vorzugsweise in den späten Phasen des Front- oder Schrägaufpralls eine hohe Amplitude aufweisen kann. Eine solche Querbeschleunigung kann zu einer Auslösung eines Rückhaltemittels zum Schutz vor einem Seitenaufprall führen. Bei einem Seitenaufprall mit dieser Querbeschleunigung wäre eine Auslösung erwünscht, nicht jedoch bei einem Front- oder Schrägaufprall.

Aus dem Artikel „New Sensor Concepts for Reliable Detection of Side-Impact Collisions" in den Proceedings zur 14th International Technical Conference of Enhanced Safety of Vehicles, Seite 1035 bis 1038, ist eine Steueranordnung bekannt, die in der Fahrzeugtür einen Luftdrucksensor aufweist, der den bei einem Seitenaufprall in der Fahrzeugtür entstehenden Luftdruckanstieg als Maß für die Beschleunigung des Fahrzeugs infolge eines Seitenaufpralls aufnimmt. Die Luftdrucksensoren sind mit einer im zentralen Bereich des Fahrzeugs angeordneten Auslöseschaltung verbunden, die bei einem ausreichend schweren Seitenaufprall Rückhaltemittel wie z. B. Seitenairbags auslöst.

Eine solche Steueranordnung mit dezentralen Sensoren weist mit Leitungen zwischen der Auslöseschaltung und den Sensoren und mit Steckverbindungen Bestandteile auf, die materialintensiv sind und deren Überprüfung auf Funktionstüchtigkeit erheblichen Aufwand erfordert. Desweiteren weist eine solche Steueranordnung einen hohen Fertigung-, Montage-, Austausch- und Reparaturaufwand auf.

Eine Steueranordnung gemäß dem Oberbegriff des Patentanspruchs 1 ist aus der DE 42 22 595 A1 bekannt. Diese Steueranordnung weist zwei am Fahrzeug befestigte und um 90° zueinander angeordnete Beschleunigungssensoren auf, so daß die Sensoreinrichtung ein Längsbeschleunigungssignal für Beschleunigungen parallel zur Fahrzeuglängsachse und ein Querbeschleunigungssignal für Beschleunigungen quer zur Fahrzeugslängsachse liefert. Aus diesen beiden Beschleunigungssignalen wird in einer Auslöseschaltung ein Beschleunigungsvektor berechnet, der durch seine Größe und seinen Winkel zur Fahrzeuglängsachse bestimmt ist. In Abhängigkeit von dem Beschleunigungsvektor wird ein Rückhaltemittel - beispielsweise auch ein Seitenairbag - aus einer Vielzahl von im Fahrzeug angeordneten Rückhaltemitteln ausgewählt und ausgelöst.

Aus dem Artikel „Point to Point" von Norman Martin in der „Automotive Industries", Juli 1993, Seite 49 bis 51, ist eine Steueranordnung zum Auslösen eines Rückhaltemittels in einem Fahrzeug bei einem Frontaufprall bekannt. Dazu sind zwei Beschleunigungssensoren in einem Winkel von +/- 45° zur Fahrzeuglängsachse zusammen mit einer Auslöseschaltung in einem gemeinsamen Steuergerät angeordnet. Abhängig von den Beschleunigungssignalen wird das Rückhaltemittel ausgelöst.

Aus der WO 89/11986 ist eine Steueranordnung zum Auslösen eines Rückhaltemittels in einem Fahrzeug bei einem Front- oder Schrägaufprall bekannt. Die Steueranordnung weist eine Sensoreinrichtung mit zwei um 90° zueinander versetzten Beschleunigungssensoren auf. Die Sensoreinrichtung liefert ein Längsbeschleunigungssignal für Beschleunigungen parallel zur Fahrzeuglängsachse und ein Querbeschleunigungssignal für Beschleunigungen quer zur Fahrzeuglängsachse. Die Beschleunigungssignale werden zum einen in einem Analogschaltkreis, zum anderen in einem Mikroprozessor ausgewertet und steuern das Rückhaltemittel an, sofern ein Front- oder Schrägaufprall als solcher erkannt wird.

Der Erfindung liegt die Aufgabe zugrunde, eine kompakte Steueranordnung zu schaffen, bei der insbesondere eine rechtzeitige Auslösung des Rückhaltemittels bei einem ausreichend schweren Seitenaufprall gewährleistet und gleichzeitig eine Auslösung bei einem minderschweren Seitenaufprall oder bei einem Front- oder Schrägaufprall verhindert wird.

Die Aufgabe wird durch die Merkmale des Patentanspruchs 1 gelöst. Die Sensoreinrichtung mit zwei Beschleunigungssensoren und die Auslöseschaltung sind in demselben Steuergerät angeordnet. Eine rechtzeitige Auslösung von Rückhaltemitteln bei einem Seitenaufprall wird dadurch gewährleistet, daß die Sensoreinrichtung ein Längsbeschleunigungssignal für Beschleunigungen parallel zur Fahrzeuglängsachse und ein Querbeschleunigungssignal für Beschleunigungen quer zur Fahrzeuglängsachse liefert, und die Auslöseschaltung naturgemäß das Querbeschleunigungssignal, aber auch das Längsbeschleunigungssignal verwertet. Ein von der Auslöseschaltung geliefertes und von dem Längsbeschleunigungssignal und dem Querbeschleunigungssignal abhängiges Ausgangssignal wird mit einem Grenzwert verglichen und löst bei Überschreiten des Grenzwertes das Rückhaltemittel aus.

Versuche haben gezeigt, daß das Fahrzeug infolge eines Seitenaufpralls auch Längsbeschleunigungen ausgesetzt ist, deren Amplituden zwar wesentlich kleiner als die Amplituden der Querbeschleunigungen bei diesem Seitenaufprall sind, die jedoch stets - insbesondere also auch während der ersten Phase eines Seitenaufpralls - vorhanden sind. Wird dieses Längsbeschleunigungssignal bei dem von der Auslöseschaltung gelieferten Ausgangssignal mitberücksichtigt, kann eine sichere Auslöseentscheidung getroffen werden. Dazu weist das Ausgangssignal den Quotienten eines vom Querbeschleunigungssignal abhängigen, bei einem Seitenaufprall schwachen ersten Signals zu einem vom Längsbeschleunigungssignal abhängigen, bei einem Seitenaufprall wesentlich schwächeren zweiten Signal auf. Der Quotient weist damit insbesondere auch in der ersten Phase eines Seitenaufpralls sehr hohe Werte auf, die über den Grenzwertvergleich zu einer sicheren Auslöseentscheidung führen. Durch die Berücksichtigung des Längsbeschleunigungssignals im Ausgangssignal wird ferner auch ein durch einen Front- oder Schrägaufprall verursachtes Querbeschleunigungssignal von einem durch einen Seitenaufprall verursachten Querbeschleunigungssignal unterschieden. Eine bei einem Front- oder Schrägaufprall unerwünschte Auslösung der Rückhaltemittel wird vermieden.

Die erfindungsgemäße Steueranordnung ist kompakt, wird in wenigen Arbeitsschritten montiert und kann auf einfache Weise gewartet und ausgetauscht werden. Steck- und Klemmverbindungen zwischen dezentral angeordneten Sensoren, Leitungen und der Auslöseschaltung entfallen.

Vorteilhafte Weiterbildungen der Erfindung sind in den Unteransprüchen gekennzeichnet.

Die Erfindung und ihre Weiterbildungen werden anhand der Zeichnungen erläutert. Es zeigen:

Figur 1: Die Anordnung eines Steuergeräts mit der erfindungsgemäßen Steueranordnung in einem Kraftfahrzeug,
Figur 2: Ein Blockschaltbild der erfindungsgemäßen Steueranordnung,
Figur 3: Ein Diagramm der bei einem Seitenaufprall auftretenden Längs- und Querbeschleunigung eines Fahrzeugs innerhalb der ersten 10 ms ab Beginn eines Seitenaufpralls.

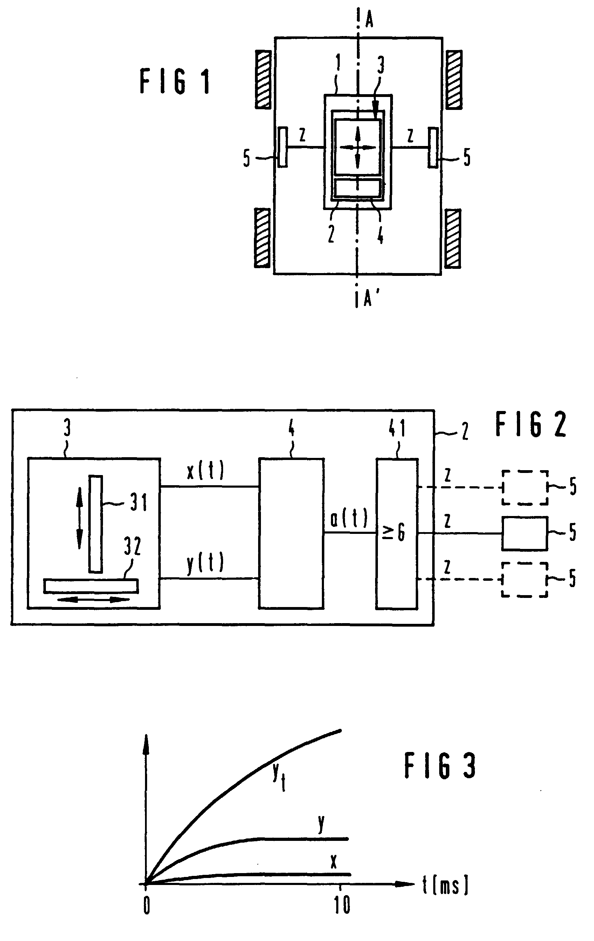

Figur 1 zeigt ein Fahrzeug mit einem Steuergerät 1, das eine Steueranordnung 2 mit einer Sensoreinrichtung 3 und einer Auslöseschaltung 4 enthält. Über Leitungen werden von der Steueranordnung 2 Zündsignale z an Rückhaltemittel 5 übertragen. Auf der Sensoreinrichtung 3 sind Empfindlichkeitsachsen von zwei Beschleunigungssensoren symbolisch dargestellt. Der erste Beschleunigungssensor liefert ein Längsbeschleunigungssignal - seine Empfindlichkeitsachse verläuft parallel zur Fahrzeuglängsachse A-A', der zweite Beschleunigungssensor liefert ein Querbeschleunigungssignal - seine Empfindlichkeitsachse verläuft quer zur Fahrzeuglängsachse A-A'. Das Steuergerät 1 ist in einem zentralen Bereich des Fahrzeugs angeordnet.

Figur 2 zeigt ein Blockschaltbild der Steueranordnung 2 mit der Sensoreinrichtung 34, die das Längsbeschleunigungssignal y(t) an die Auslöseschaltung liefert. Die Auslöseschaltung 2 liefert ein Ausgangssignal a(t) an einen Vergleicher 41. Überschreitet das Ausgangssignal a(t) den Grenzwert G, werden die Zündsignale z an die Rückhaltemittel 5 übermittelt.

Die Sensoreinrichtung 3 weist mindestens zwei Beschleunigungssensoren 31 und 32 auf. Diese sind räumlich beliebig angeordnet, unter der Voraussetzung, daß die Sensoreinrichtung 3 das Längsbeschleunigungssignal x(t) für Beschleunigungen parallel zur Fahrzeuglängsachse A-A' und das Querbeschleunigungssignal y(t) für Beschleunigungen quer zur Fahrzeuglängsachse A-A' liefert. Dabei weisen die Beschleunigungssensoren 31 und 32 vorzugsweise Empfindlichkeitsachsen auf, die parallel und quer zur Fahrzeugslängsachse A-A' ausgerichtet sind, wie auch in Figur 1 symbolisch dargestellt. Es ist jedoch auch eine Anordnung der Beschleunigungssensoren 31 und 32 mit ± 45° oder einem anderen Winkel zur Fahrzeuglängsachse A-A' möglich: Das Längsbeschleunigungssignal x(t) und das Querbeschleunigungssignal y(t) werden dann über entsprechende Winkelfunktionen aus den Signalen der Beschleunigungssensoren 31 und 32 ermittelt.

Die Beschleunigungssensoren 31 und 32 liefern analoge oder zumindest quasi-analoge Signale. Dabei können sie nach dem kapazitiven, dem piezoresistiven, dem piezoelektrischen oder einem anderen Prinzip arbeiten. Jeder Beschleunigungssensor kann auch aus diversen Beschleunigungsschaltern mit unterschiedlichen Ansprechschwellwerten aufgebaut sein, wobei die binären Signale der einzelnen Beschleunigungsschalter zu einem quasianalogen Beschleunigungssignal zusammengesetzt werden.

Vorzugsweise sind die Beschleunigungssensoren 31 oder 32 bipolar ausgebildet, d. h. jeder Beschleunigungssensor ist für zwei zueinander entgegengesetzte Richtungen empfindlich. Damit kann beispielsweise der Beschleunigungssensor 32 mit seiner Empfindlichkeitsachse quer zur Fahrzeuglängsachse A-A' durch einen Seitenaufprall von links als auch von rechts hervorgerufene Beschleunigungen erkennen. Alternativ können auch unipolare Beschleunigungssensoren eingesetzt werden, unter der Voraussetzung, daß die Sensoreinrichtung 3 das Längsbeschleunigungssignal x(t) und das Querbeschleunigungssignal y(t) liefert.

Werden integrierte Beschleunigungssensoren 31 oder 32 eingesetzt, können die Beschleunigungssensoren zusammen mit der Auslöseschaltung 4 auf einem Halbleiterchip hergestellt werden.

Die Auslöseschaltung 4 kann als analoge Schaltung oder als Mikroprozessor ausgebildet sein. Das von ihr gelieferte Ausgangssignal a(t) wird mit dem Grenzwert G verglichen, wobei über den Grenzwert G, die Empfindlichkeit der Steueranordnung 2 eingestellt wird. Überschreitet das Ausgangssignal a(t) den Grenzwert G so wird ein Zündbefehl z an mindestens ein Rückhaltemittel 5 sind vorzugsweise Seitenairbags auf der Fahrer- und der Beifahrerseite, oder sonstige Mittel zum Schutz der Insassen bei einem Seitenaufprall.

Vorzugsweise wird das Ausgangssignal a(t) mit mehreren verschiedenen Grenzwerten G verglichen, um mehrere unterschiedliche Rückhaltemittel oder auch mehrere Stufen eines mehrstufigen Rückhaltemittels - wie z. B. die Kammern eines Seitenairbags - abhängig von der Schwere des Seitenaufpralls und damit zeitlich versetzt auszulösen.

Vorzugsweise enthält die Auslöseschaltung 4 eine weitere Schaltungseinheit, die abhängig von dem Längsbeschleunigungssignal x(t) und dem Querbeschleunigungssignal y(t) nur bestimmte Rückhaltemittel auslöst. So werden beispielsweise bei einem Seitenaufprall auf der Fahrerseite nur Rückhaltemittel ausgelöst, die auf der Fahrerseite angeordnet sind, nicht aber Rückhaltemittel auf der Beifahrerseite.

Erfindungsgemäß liefert die Auslöseschaltung 4 ein Ausgangssignal a(t), das nicht nur von dem Querbeschleunigungssignal y(t), sondern auch von dem Längsbeschleunigungssignal x(t) abhängt. Figur 3 zeigt qualitativ die auf ein Fahrzeug wirkende Quer- und Längsbeschleunigung x und y während der ersten Millisekunden ab Beginn eines Seitenaufpralls. Das Längsbeschleunigungssignal x(t) ist selbst bei einem Seitenaufprall, der unter einem 90° Winkel zur Fahrzeuglängsachse A-A' erfolgt, deutlich wahrnehmbar, dabei aber sehr schwach ausgebildet. Das mit der zentralen Sensoreinrichtung 3 in der ersten Millisekunden des Seitenaufpralls aufgenommene Querbeschleunigungssignal y(t) ist schwach ausgebildet im Vergleich zu dem Querbeschleunigungssignal „Tür" yt(t), das von einem in der betroffenen Fahrzeugtür angeordneten Beschleunigungssensor aufgenommen wird.

Das mit einem, Grenzwert verglichene Querbeschleunigungssignal y(t) führt im Gegensatz zum Querbeschleunigungssignal „Tür" yt(t) nicht zu einer sicheren Auslöseentscheidung: Der Grenzwert als Auslöseschwelle muß notwendigerweise sehr niedrig angesetzt werden. Schon geringe Schwankungen eines Beschleunigungssignals oder Störsignale können deshalb eine unerwünschte Auslösung hervorrufen.

Vorzugsweise wird ein vom Querbeschleunigungssignal y(t) abhängiges erstes Signal gebildet und auf ein vom Längsbeschleunigungssignal x(t) abhängiges zweites Signal bezogen. Dabei wird ausgenutzt, daß der Quotient aus dem ersten Signal mit einer verhältnismäßig kleinen Amplitude zu dem zweiten Signal mit einer sehr kleinen Amplitude das Ausgangssignal a(t) mit einer sehr großen Amplitude liefert, das mit dem Grenzwert G verglichen wird und damit eine sichere Auslöseentscheidung liefert. Des weiteren führt ein durch einen Front- oder Schrägaufprall hervorgerufenes Querbeschleunigungssignal y(t) keinesfalls zur Auslösung der Rückhaltemittel 5, da ein großes Längsbeschleunigungssignal x(t) im Nenner des Quotienten ein Überschreiten des Grenzwertes G durch das Ausgangssignal a(t) verhindert.

Vorzugsweise ist das erste Signal ein vom Querbeschleunigungssignal y(t) abhängiges Energiesignal und das zweite Signal ein vom Längsbeschleunigungssignal x(t) abhängiges Energiesignal. Dabei beschreiben die Energiesignale den zeitlichen Energieabbau der durch einen Seitenaufprall auf das Fahrzeug übertragenen Energie in Längs- bzw. Querrichtung ab Beginn des Seitenaufpralls. Durch die Verwendung von Energiesignalen wird der Signalabstand zwischen dem ersten Signal und dem Zweiten Signal und damit die Amplitude des Quotienten vergrößert: Die Grenzwertentscheidung wird damit zuverlässiger. Durch die zeitliche Aufsummierung der differentiellen Energiebeiträge werden hochfrequente Schwankungen der Beschleunigungssignale geglättet. Ferner wird die zeitliche Vorgeschichte der Beschleunigungssignale berücksichtigt.

Vorzugsweise enthält das erste Signal eine additive Konstante K1 und das zweite Signal eine additive Konstante K2. Über die Konstanten K1 und K2 sowie den Grenzwert G wird die Auslösungsentscheidung an die jeweiligen Anwendung bzw. den jeweiligen Fahrzeugtyp angepaßt.

Vorzugsweise wird das Ausgangssignal a(t) nach folgender Formel berechnet:

$$a(t) = \frac{\int_0^t (y^2(t))\,dt + K1}{\int_0^t (x^2(t))\,dt + K2}$$

Die Auslöseschaltung 4 kann auch bei beliebiger Anordnung der Beschleunigungssensoren in der Sensoreinrichtung 3 ein Mikroprozessor sein, und gleichzeitig mit der Sensoreinrichtung 3 in demselben Steuergerät 1 in einem zentralen Bereich des Fahrzeugs angeordnet sein.

Die zentral angeordnete Sensoreinrichtung 3 liefert mit dem Längsbeschleunigungssignal x(t) und dem Querbeschleunigungssignal y(t) bei beliebiger Anordnung der Beschleunigungssensoren 31 und 32 zudem Signale, die infolge der Auswertung durch die Auslöseschaltung auch zur Front- oder Schrägaufprallerkennung verwendet werden können.

## Patentansprüche

1. Steueranordnung zum Auslösen eines Rückhaltemittels in einem Kraftfahrzeug bei einem Seitenaufprall mit einer Sensoreinrichtung 3, die zwei Beschleunigungssensoren (31) (32) enthält, und die ein Längsbeschleunigungssignal (x(t)) für Beschleunigungen parallel zur Fahrzeuglängsachse (A - A') und ein Querbeschleunigungssignal (y(t)) für Beschleunigungen quer zur Fahrzeugslängsachse (A - A') liefert, und mit einer Auslöseschaltung (4), die ein durch das Längsbeschleunigungssignal (x(t)) und das Querbeschleunigungssignal (x(t)) bestimmtes Ausgangssignal (a(t)) liefert, wobei bei Überschreiten eines Grenzwertes G durch das Ausgangssignal (a(t)) das Rückhaltemittel (5) ausgelöst wird, **dadurch gekennzeichnet,**

daß das Ausgangssignal (a(t)) durch den Quotienten eines vom Querbeschleunigungssignal (y(t)) abhängigen ersten Signals zu einem vom Längsbeschleunigungssignal (x(t)) abhängigen zweiten Signal bestimmt ist, und
daß die Sensoreinrichtung (3) und die Auslöseschaltung (4) in demselben Steuergerät angeordnet sind.

2. Steueranordnung nach Anspruch 1, dadurch gekennzeichnet,

daß das erste Signal durch ein vom Querbeschleunigungssignal (y(t)) abhängiges Energiesignal und das zweite Signal durch ein vom Längsbeschleunigungssignal (x(t)) abhängiges Energiesignal bestimmt ist.

3. Steueranordnung nach Anspruch 1, dadurch gekennzeichnet,

daß das Ausgangssignal nach folgender Formel berechnet wird:

$$a(t) = \frac{\int_0^t (y^2(t))\,dt + K1}{\int_0^t (x^2(t))\,dt + K2}$$

worin folgende Variablen enthalten sind:

a(t)    Ausgangssignal
y(t)    Querbeschleunigungssignal
x(t)    Längsbeschleunigungssignal K1 Konstante K2 Konstante

4. Steueranordnung nach Anspruch 1, dadurch gekennzeichnet daß das Steuergerät (1) in einem zentralen Bereich des Fahrzeuges angeordnet ist.

5. Steueranordnung nach Anspruch 1, dadurch gekennzeichnet,

daß jeder Beschleunigungssensor (31) (32) für zwei zueinander entgegengesetzte Richtungen empfindlich ist.

6. Steueranordnung nach Anspruch 1, dadurch gekennzeichnet,

daß der erste Beschleunigungssensor (31) eine Empfindlichkeitsachse parallel zur Fahrzeuglängsachse (A-A') und der zweite Beschleunigungssensor (32) eine Empfindlichkeitsachse quer zur Fahrzeuglängsachse (A-A') aufweist.

7. Steueranordnung nach Anspruch 1, dadurch gekennzeichnet,

   daß die Auslöseschaltung (4) ein Mikroprozessor ist.

8. Steueranordnung nach Anspruch 1, die zugleich zur Auslösung eines Rückhaltemittels in einem Fahrzeug bei einem Front- oder Schrägaufprall verwendet wird.

**Claims**

1. Control system for triggering a retention means in a motor vehicle in the event of a side-impact collision, said control system containing a sensor unit (3) with two acceleration sensors (31) (32) supplying a longitudinal acceleration signal (x(t)) for acceleration in a direction parallel to the longitudinal vehicle axis (A-A') and a transverse acceleration signal (y(t)) for acceleration in a direction at right angles to the longitudinal vehicle axis (A-A'), and also containing a triggering circuit (4) supplying an output signal (a(t)) determined by the longitudinal acceleration signal (x(t)) and the transverse acceleration signal (y(t)), the retention means (5) being triggered if the output signal (a(t)) exceeds the limit value G, characterized in that the output signal (a(t)) is determined by the ratio between a first signal dependent on the transverse acceleration signal (y(t)) and a second signal dependent on the longitudinal acceleration signal (x(t)), and in that the sensor unit (3) and the triggering circuit (4) are accommodated in the same control unit.

2. Control system according to Claim 1, characterized in that the first signal is determined by an energy signal dependent on the transverse acceleration signal (y(t)) and in that the second signal is determined by an energy signal dependent on the longitudinal acceleration signal (x(t)).

3. Control system according to Claim 1, characterized in that the output signal is calculated in accordance with the following formula:

$$a(t) = \frac{\int_{0}^{t} (y^2(t))dt + K1}{\int_{0}^{t} (x^2(t))dt + K2}$$

with variables as follows:

a(t)      Output signal

y(t)      Transverse acceleration signal

x(t)      Longitudinal acceleration signal

K1        Constant

K2        Constant

4. Control system according to Claim 1, characterized in that the control unit (1) is accommodated in a central area of the vehicle.

5. Control system according to Claim 1, characterized in that each acceleration sensor (31) (32) is sensitive in two mutually opposite directions.

6. Control system according to Claim 1, characterized in that the first acceleration sensor (31) has a sensitivity axis running parallel to the longitudinal vehicle axis (A-A') and the second acceleration sensor (32) has a sensitivity axis running at right angles to the longitudinal vehicle axis (A-A').

7. Control system according to Claim 1, characterized in that the triggering circuit (4) is a microprocessor.

8. Control system according to Claim 1, which is simultaneously used for triggering a retention means in a vehicle in the event of a front- or oblique-impact collision.

**Revendications**

1. Dispositif de commande pour déclencher un moyen de retenue dans un véhicule automobile en cas de choc latéral, comportant un dispositif à détecteurs (3) comprenant deux détecteurs d'accélération (31) (32) et fournissant un signal d'accélération longitudinale (x(t)) pour des accélérations parallèles à l'axe longitudinal du véhicule automobile (A-A'), et un signal d'accélération transversale (y(t)) pour des accélérations perpendiculaires à l'axe longitudinal du véhicule automobile (A-A'), et comportant un circuit de déclenchement (4) qui fournit un signal de sortie (a(t)) déterminé par le signal d'accélération longitudinale (x(t)) et par le signal d'accélération transversale (y(t)), le moyen de retenue (5) étant déclenché par le signal de sortie (a(t)) en cas de dépassement d'une valeur limite G,

caractérisé en ce que le signal de sortie (a(t)) est déterminé par le quotient d'un premier signal dépendant du signal d'accélération transversale (y(t)), par un deuxième signal dépendant du signal d'accélération longitudinale (x(t), et

en ce que le dispositif à détecteurs (3) et le circuit de déclenchement (4) sont disposés dans le même appareil de commande.

2. Dispositif de commande suivant la revendication 1, caractérisé en ce que le premier signal est déterminé par un signal d'énergie dépendant du signal (y(t)) d'accélération transversale et en ce que le deuxième signal est déterminé par un signal d'énergie dépendant du signal (x(t)) d'accélération longitudinale.

3. Dispositif de commande suivant la revendication 1, caractérisé en ce que le signal de sortie est calculé d'après la formule suivante:

$$a(t) = \frac{\int_0^t (y^2(t))\,dt + K1}{\int_0^t (x^2(t))\,dt + K2}$$

comportant les variables suivantes:

a(t)   Signal de sortie
y(t)   Signal d'accélération transversale
x(t)   Signal d'accélération longitudinale
K1     Constante
K2     Constante

4. Dispositif de commande suivant la revendication 1, caractérisé en ce que l'appareil de commande (1) est disposé dans une zone centrale du véhicule automobile.

5. Dispositif de commande suivant la revendication 1, caractérisé en ce que chaque détecteur d'accélération (31) (32) est sensible pour deux directions opposées l'une par rapport à l'autre.

6. Dispositif de commande suivant la revendication 1, caractérisé en ce que le premier détecteur d'accélération (31) présente un axe de sensibilité parallèle à l'axe longitudinal du véhicule automobile (A-A') et que le deuxième détecteur d'accélération (32) présente un axe de sensibilité perpendiculaire à l'axe longitudinal du véhicule automobile (A-A').

7. Dispositif de commande suivant la revendication 1,

caractérisé en ce que le circuit de déclenchement (4) est un microprocesseur.

8. Dispositif de commande suivant la revendication 1, qui est utilisée en même temps pour déclencher un moyen de retenue dans un véhicule automobile en cas de choc frontal ou en cas de choc oblique.

FIG 1

FIG 2

FIG 3